(19) **Europäisches Patentamt / European Patent Office / Office européen des brevets**

(11) **EP 2 440 812 B1**

(12) **EUROPEAN PATENT SPECIFICATION**

(45) Date of publication and mention of the grant of the patent:
**26.06.2013 Bulletin 2013/26**

(51) Int Cl.:
**F16H 55/08** (2006.01)   **F16H 1/12** (2006.01)

(86) International application number:
**PCT/US2010/038520**

(21) Application number: **10727603.2**

(22) Date of filing: **14.06.2010**

(87) International publication number:
**WO 2010/144910 (16.12.2010 Gazette 2010/50)**

(54) **Gear sets and differentials comprising a helical face gear**

Radsatz und Differentiale mit schrägverzahntem Stirnrad

Ensembles d'engrenages et différentiels comprenant un engrenage hélicoïdale

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **12.06.2009 US 186618 P**

(43) Date of publication of application:
**18.04.2012 Bulletin 2012/16**

(73) Proprietor: **Eaton Corporation**
**Cleveland, Ohio 44114 (US)**

(72) Inventors:
• **COCHREN, Steven J.**
**Commerce**
**Michigan 48382 (US)**
• **RADZEVICH, Stephen P.**
**Sterling Heights**
**Michigan 48310 (US)**
• **HERRMANN, Paul N.**
**Clinton Township**
**Michigan 48036 (US)**
• **RUDKO, Steven J.**
**Eastpointe**
**Michigan 48021 (US)**

(74) Representative: **Schwan - Schwan - Schorer**
**Bauerstrasse 22**
**80796 München (DE)**

(56) References cited:
EP-A1- 0 227 152      DE-A1-102005 050 794
DE-B3-102004 062 379   US-A- 3 253 483
US-A- 3 918 314        US-A- 4 791 832

## Description

### TECHNICAL FIELD

The present invention relates to a gear set, including a first gear comprising a helical face gear and a second gear comprising a helical pinion in meshing engagement with the helical face gear. The gear set may be configured for use in a differential.

### BACKGROUND

Helical face gears for use in differentials are known in the art, as set forth for example, in U.S. Pat. No. 3,253,483 and U.S. Pat. No. 4,791,832, which document can be seen to constitute the closest prior art. However, incorporation of helical face gears into differentials has not been commercially utilized because of, for example, limitations with respect to determination of gear tooth architecture and to the strength of the gears, both of which may adversely affect performance of the gear set.

It may be desirable to utilize face gear technology that may overcome these limitations. Face gear technology may allow for the option of more and/or larger diameter pinions and more robust primary helical face gears that may be better supported. With respect to the use of face gear technology in connection with a differential, the compact size of side gears utilizing face gear technology in connection with a torque ring may allow for greater flexibility in packaging and design. In this way, the overall strength of the differential for a given package size can be increased. Furthermore, the compact nature of the gear set and a torque ring, in some embodiments, may direct the dynamic forces in a more beneficial way and may allow the same gear set and internal components to be used in connection with various packaging designs of various models of motor vehicles, thereby increasing the transportability of the differential.

### SUMMARY

A gear set is provided including a side gear comprising a helical face gear with at least one helical tooth and a helical pinion. The helical pinion may have at least one helical tooth and may have an apex angle that is less than about 20°. The helical pinion may be configured for meshing engagement with the side gear. A differential may also be provided. The differential may comprise a differential case and a gear set. The gear set may include a side gear comprising a helical face gear with at least one helical tooth and a helical pinion. The helical pinion may have at least one helical tooth and may have an apex angle that is less than about 20°. The differential may further include a torque ring configured to support the helical pinion.

### BRIEF DESCRIPTION OF THE DRAWINGS

Embodiments of the invention will now be described, by way of example, with reference to the accompanying drawings, wherein:

FIG. 1 is a perspective view of a first gear in accordance with an embodiment of the invention.

FIG. 2A is front view of a second gear in accordance with an embodiment of the invention.

FIG. 2B is a side view of the second gear of FIG. 2A.

FIG. 3A is a perspective view of a torque ring for use with the first gear of FIG. 1 in accordance with an embodiment of the invention.

FIG. 3B is a side view of the torque ring of FIG. 3A.

FIG. 4 is a schematic illustrating the apex angle of a first gear in accordance with an embodiment of the invention.

FIG. 5 is a schematic illustrating the tooth flank geometry of a first gear in accordance with an embodiment of the invention.

FIG. 6A is a cross-sectional view of a gear set in accordance with an embodiment of the invention incorporated into a differential.

FIG. 6B is a front view of a portion of the gear set of FIG. 6A.

FIG. 7 is a cross-sectional view of a gear set in accordance with an embodiment of the invention incorporated into a differential.

FIG. 8 is an exploded view of an electrically selectable locking differential including a gear set in accordance with an embodiment of the invention.

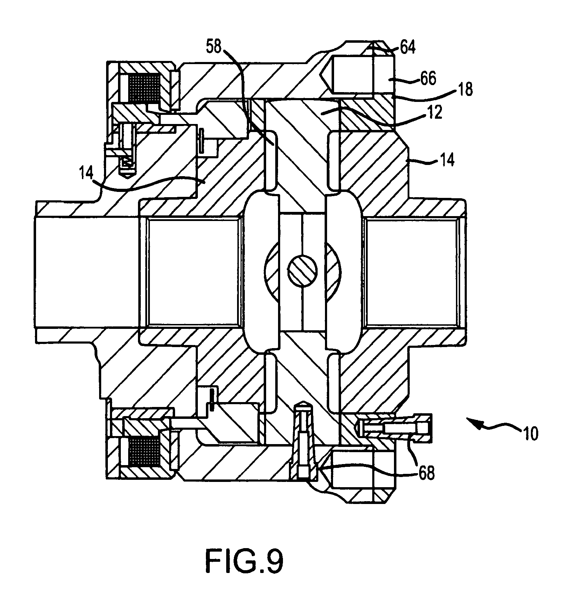

FIG. 9 is a cross-sectional view of a differential including a torque limiting fuse and a gear set in accordance with an embodiment of the present invention.

FIG. 10 is a cross-section view of a differential including torque limiting clutch plates and a gear set in accordance with an embodiment of the present invention.

FIG. 11 is a partial cross-sectional view of a differential including an air/hydraulic actuator and a gear set in accordance with an embodiment of the invention.

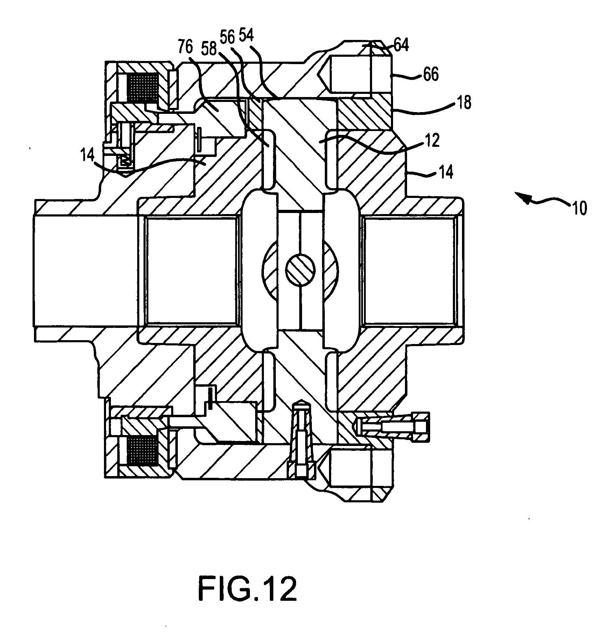

FIG. 12 is a cross-sectional view of a differential including a gear set in accordance with an embodiment of the invention.

DETAILED DESCRIPTION

Reference will now be made in detail to embodiments of the present invention, examples of which are described herein and illustrated in the accompanying drawings. While the invention will be described in conjunction with embodiments, it will be understood that they are not intended to limit the invention to these embodiments. On the contrary, the invention is intended to cover alternatives, modifications and equivalents, which may be included within the scope of the invention as embodied by the appended claims.

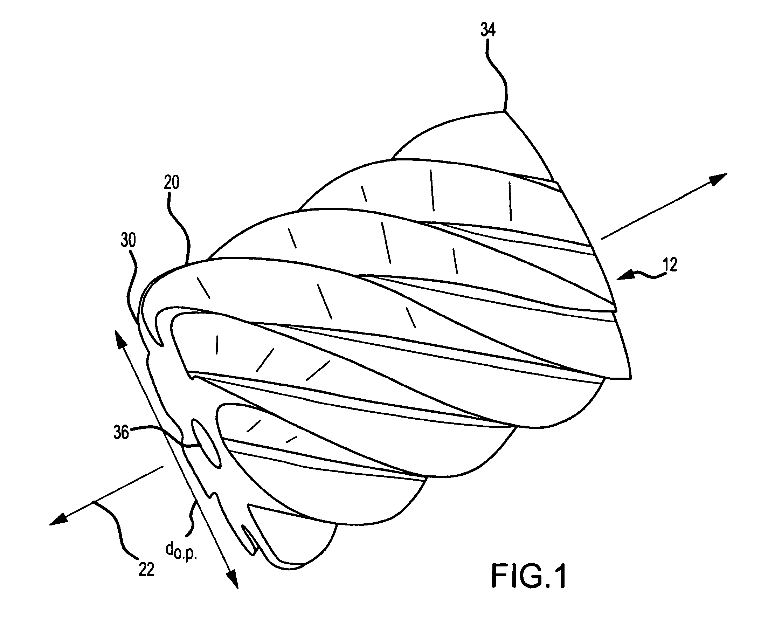

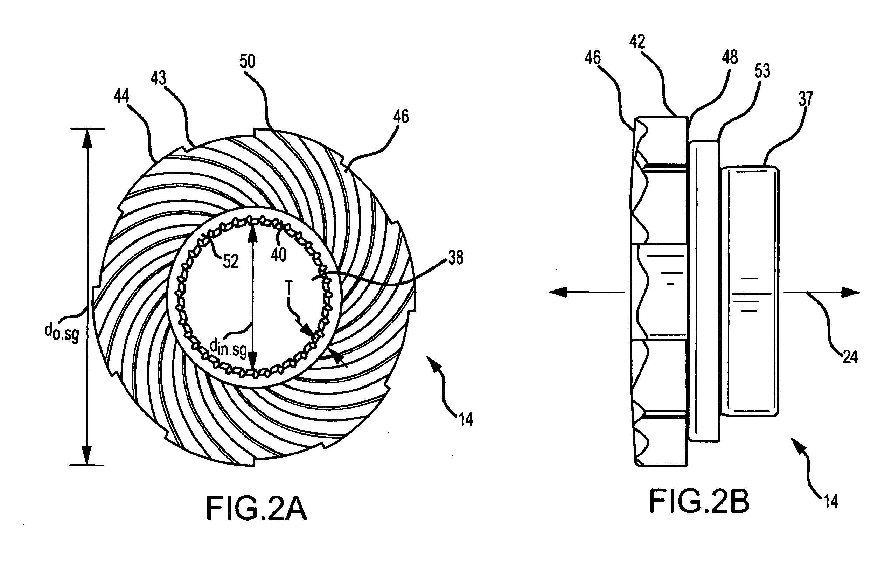

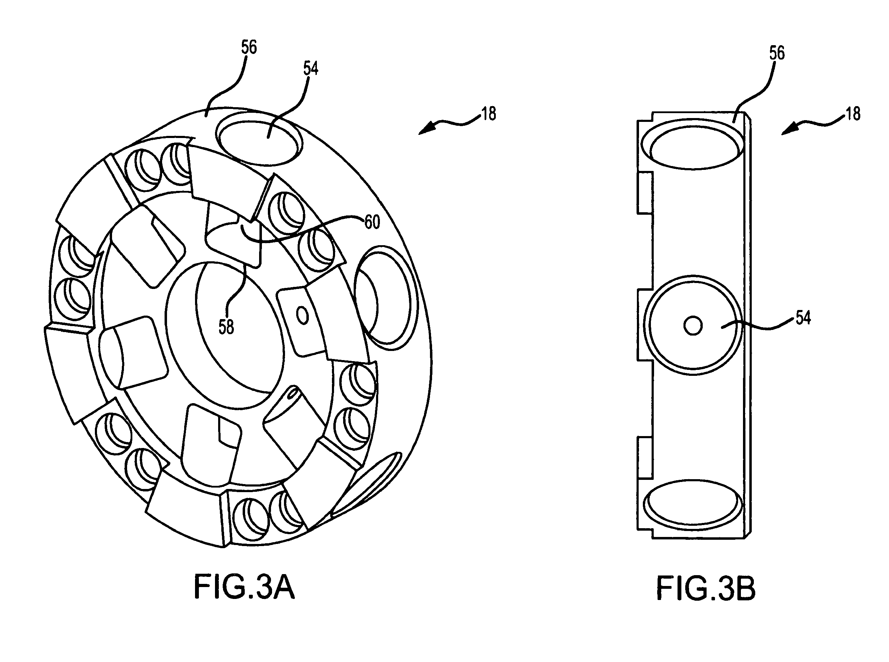

A gear set 10 in accordance with the present invention may include a first gear 12 and a second gear 14. Referring now to FIGS. 1-2, the first gear 12 may comprise a helical pinion, and the second gear 14 may comprise a side gear. In an embodiment, the first gear 12 may comprise a helical pinion for use in a differential. In this embodiment for a differential, the first gear 12 may be provided to transmit torque from a torque ring 18 to second gear 14 (e.g., a side gear 14). The torque ring 18 may be as shown in FIGS. 3A-B and may be configured as described in further detail herein. Alternatively, the first gear 12 may be provided to transmit torque from one side gear 14 to another side gear 14. Further, in this embodiment, there may be a plurality of pinions 12. The number of the pinions 12 in gear set 10 may vary. However, there may be at least two pinions 12 in gear set 10 when the pinions 12 are used in a differential. The number of pinions 12 may be about six in an embodiment, although greater or fewer pinions 12 may be used in other embodiments. In contrast, the number of bevel pinions that may be utilized in a conventional gear set for a differential may only be about four. The maximum number of pinions 12 used in a differential may be determined using the following formula, where the outer diameter of the pinion 12 is denoted as $d_{o.p}$, and the inner diameter of the corresponding side gear 14 is denoted as $d_{in.sg}$.

$$N_p \leq \frac{180°}{\tan^{-1}\left(\dfrac{d_{o.p}}{d_{in.sg}}\right)} \qquad \text{(Equation 1)}$$

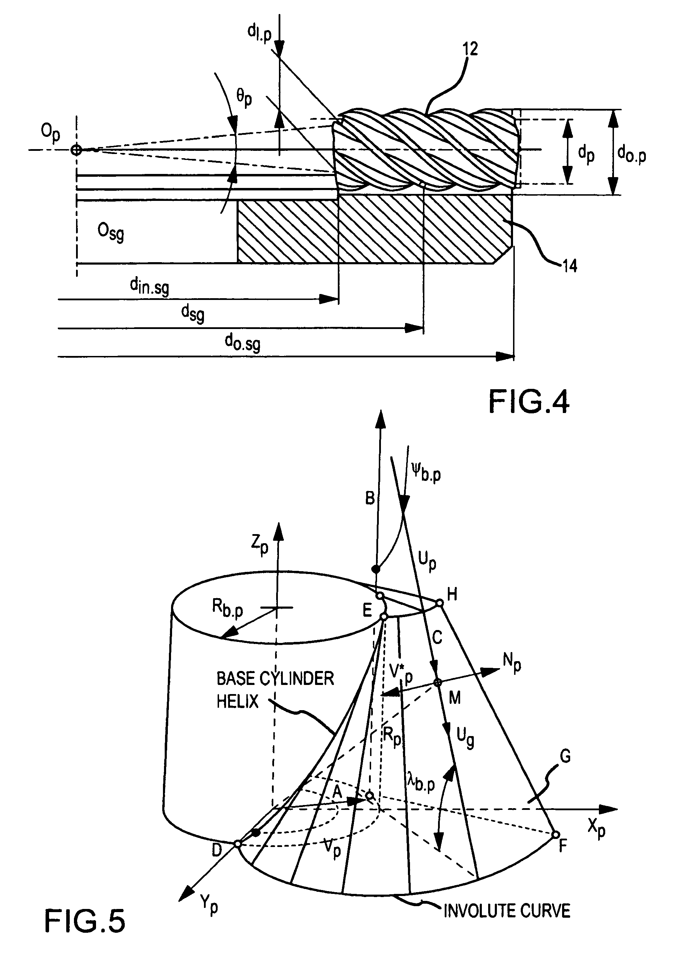

The size of pinions 12 may also vary. However, in an embodiment, the pinions 12 may be about one half the size of a conventional bevel pinion gear used in a differential. In addition, the pinions 12 may be configured to have a low apex angle $\theta_p$ as compared to conventional gear designs. Referring now to FIG. 4, a schematic illustrating the apex angle of a pinion 12 is shown. In an embodiment, the apex angle $\theta_p$ may be less than about 20°. The apex angle $\theta_p$ may be subject to the following equation, in which $d_{o.p}$ is the outer diameter of the pinion 12, $d_{l.p}$ is the limit diameter of the pinion 12, $d_{o.sg}$ is the outer diameter of the side gear 14, and $d_{in.sg}$ is the inner diameter of the side gear 14.

$$\theta_p \leq \sin^{-1}\left(\frac{d_{o.p} - d_{l.p}}{d_{o.sg} - d_{in.sg}}\right) \qquad \text{(Equation 2)}$$

The number of helical teeth 20 on pinion 12 and the geometry of the tooth flank of the helical teeth 20 on pinion 12 may be flexible in accordance with an embodiment of the invention. The helical teeth 20 may be formed by forging technology. The use of forging technology instead of machine-cutting technology may significantly improve the strength of the pinions 12. The use of helical teeth 20 also allows less emphasis to be placed on where the pinions 12 are in their rotation as compared to conventional bevel pinions, which may eliminate the requirement of indexing. The number of helical teeth 20 on pinion 12 may be considered a low tooth count relative to the size of the pinions 12. For example, the tooth count (i.e., the number of helical teeth 20) of pinion 12 may between about 4 to 10. Although a tooth count of about 4 to 10 is mentioned in detail, the tooth count of the pinions 12 may be lower or higher in other embodiments of the invention.

Referring now to FIG. 5, the geometry G of the tooth flank for the helical teeth 20 on pinion 12 may be determined in accordance with the following equation, in which $r_p$ = the position vector of a point of the tooth flank of the pinion 12; $U_p$, $V_p$ = curvilinear (Guassian) coordinates of a point of the tooth flank of the pinion 12; :$r_{b.p}$ = the radius of the base cylinder of the pinion 12; and $\tau_{b.p}$ = the base helix angle of the pinion 12.

$$r_p(U_p, V_p) = \begin{bmatrix} r_{b.p} \cos V_p + U_p \cos \tau_{b.p} \sin V_p \\ r_{b.p} \sin V_p - U_p \sin \tau_{b.p} \sin V_p \\ r_{b.p} \tan \tau_{b.p} - U_p \sin \tau_{b.p} \\ 1 \end{bmatrix} \qquad \text{(Equation 3)}$$

When the pinion 12 is stationary, then the tooth flank of the pinion 12 may be analytically described by Equation 3. When the pinion 12 is rotated about its axis 22 through a certain angle $\varphi_p$, and when it is moving around the axis 24 of the side gear 14, the position vector of a point of the tooth flank of the pinion 12 in a current position of the pinion 12 may be expressed in the following form:

$$r_p^\bullet = r_p^\bullet(U_p, V_p, \varphi_p) \qquad \text{(Equation 4)}$$

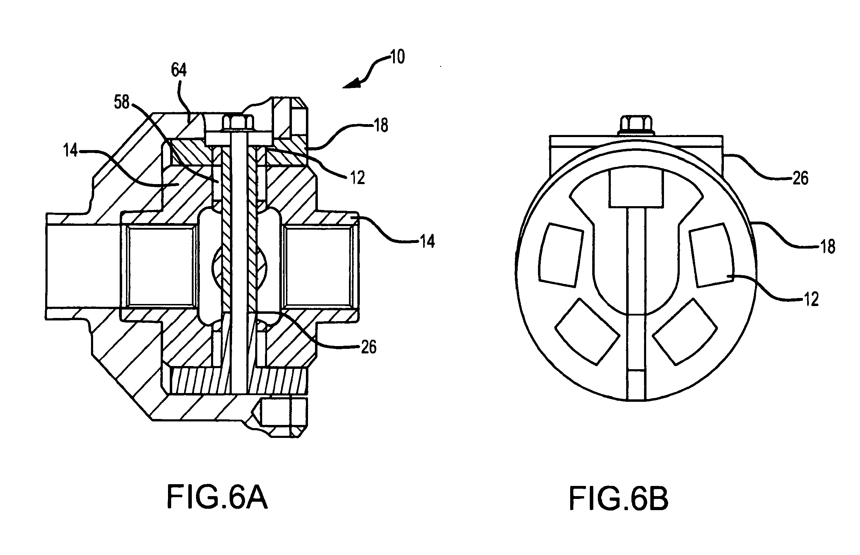

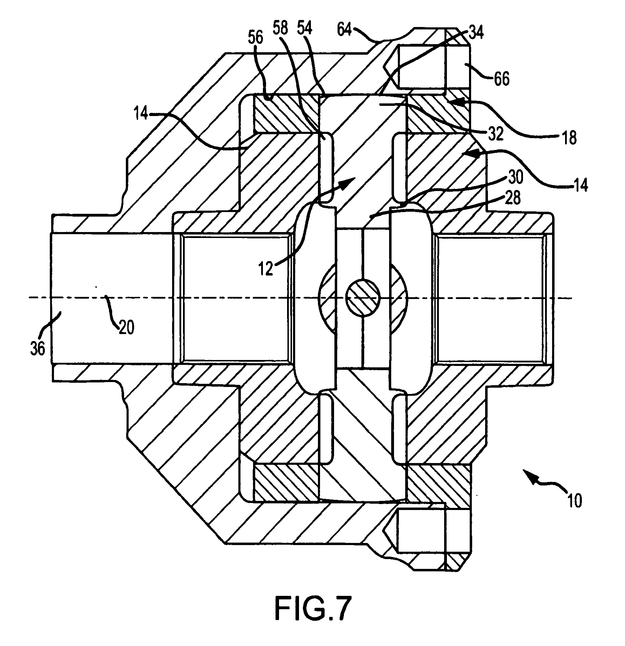

The pinions 12 may also be configured to provide flexibility with respect to structural features to accommodate various embodiments. For example, the pinions 12 may be modified to provide access for C-clips 26 as illustrated in FIGS. 6A-6B. C-clips 26 may be provided for axially positioning side gears 14 on the axle shafts and retaining the axle shafts. In another example, the pinions 12 may be modified to include a boss 28 at the first end 30 and a counter diameter 32 at the second end 34, as illustrated in FIG. 7. The boss 28 and counter diameter 32 may be configured to better support pinion 12 and may be provided to alter the bias ratio. The boss 28 and counter diameter 32 may be configured to either increase and/or decrease the bias ratio depending upon the desired end result. The pinions 12 may also be modified to include an axially extending bore 36. The bore 36 may extend through the center of the pinion 12 along axis 22. The bore 36 may be configured to receive an axle for rotating the pinion 12. Although a bore 36 is mentioned in detail and is illustrated, the pinion 12 may not have a bore 36 in other embodiments of the invention.

In an embodiment of the invention, the first end 30 of the pinions 12 may be flat, and the second end 34 of the pinions 12 (i.e., opposing the first end 30) may be hemispherical in shape. The second end 34 may be configured to have a hemispherical shape such that the second end 34 has the same radius of curvature as the outer surface 56 of the torque ring 18 shown in FIG. 3. In addition, the second end 34 of the pinion 12 may be configured so that it matches the inner surface of a housing for the gear set 10 (e.g., a differential case). The shape of the pinion 12 may thus help control friction of the gear set 10, since no other device is necessary to maintain the outer shape of the torque ring 18. Although the first end 30 of the pinion 12 is described as flat, and the second end 34 of the pinion 12 is described as hemispherical in shape, the pinion 12 may have other shapes in other embodiments of the invention.

The second gear 14 may comprise a helical face gear. The second gear 14 may be configured to be in meshing engagement with the first gear 12. In an embodiment, the second gear 14 may comprise a side gear for use in a differential. In this embodiment for a differential, the second gear 14 may be configured to transmit torque from the first gear 12 to an output (e.g., axle shafts of a motor vehicle). Further, in this embodiment for a differential, there may be a plurality (e.g., a pair) of side gears 14. Each side gear 14 may have a first annular hub portion 37. Each annular hub portion 37 may be configured to receive an axle shaft (not shown) of a motor vehicle, for example. The annular hub portion 37 may define an inner axially aligned opening 38. The inner radial surface of annular hub portion 37 of the side gear 14 that defines the opening 38 may include a plurality of splines 40 (i.e., may be splined). The axle shafts (not shown) may connect to side gears 14 through a splined interconnection with the splines 40 on the inner surface defining the inner axially aligned opening 38. Accordingly, the side gears 14 may be configured to be in splined engagement with a pair of axle shafts.

The plurality of side gears 14 (e.g., in an embodiment for use in a differential) may be located on opposing sides of first gear 12. In particular, in an embodiment, the pair of side gears 14 may be located on opposing sides of a torque ring 18 configured to retain the helical pinions 12. Each side gear 14 may have a main portion 42 with an outer surface 43. The outer surface 43 may extend circumferentially around the axis 24 of the side gear 14. The outer surface 43 may have at least one projection 44 extending radially outwardly from the outer surface 43. The projections 44 may be configured for supporting the side gear 14. In particular, the projection 44 may be configured for supporting the side gear 14 in connection with a corresponding element on the torque ring 18. The projection 44 may be configured to be received by a corresponding recess in the torque ring 18. The side gear 14 may include about six projections 44 as illustrated. Although six projections 44 are mentioned in detail, the side gear 14 may include fewer or more projections 44 in other embodiments. The projections 44 may be configured to increase the robustness of the side gear 14.

The main portion 42 of the side gear 14 may further include a helical face 46. Helical face 46 of each side gear 14 may face torque ring 18. The helical face 46 of each side gear 14 may be in meshing engagement with the pinions 12. The pinions 12 and side gear 14 may thus share torque via gear meshing. In an embodiment, each side gear 14 may further have a substantially flat surface 48 opposing the helical face 46. Although the surface 48 opposing the helical face 46 is described as flat, the opposing surface may not necessarily be flat in embodiments of the invention.

The helical face 46 may comprise a plurality of teeth 50. The helical teeth 50 of side gear 14 may be forged. The use of forging technology in place of machine-cutting technology may significantly improve the strength of the side gears 14. In addition, the use of forging technology in connection with the side gear 14 allows the side gear 14 to have a hub 52. Hub 52 may be integral with side gear 14 and may extend circumferentially around the inner diameter $d_{in.sg}$ of the side gear 14. The hub 52 may have a radially extending thickness T. The radially extending thickness T may vary in accordance with different embodiments of the invention. The hub 52 may be configured to improve the strength of the side gear 14 at its otherwise weakest point. Each of the helical teeth 50 of side gear 14 may extend radially inwardly toward the hub 52. The hub 52 may be integral with each of the helical teeth 50 of side gear 14. In an embodiment, the top surface of each helical tooth 50 may be substantially flush with the top surface of the hub 52. Although the top surface of the hub 52 may be substantially flush with the top surface of each helical tooth 50 in an embodiment, the top surface of the hub 52 may be higher or lower than the top surface of each helical tooth 50 in other embodiments of the invention.

The number of helical teeth 50 on side gear 14 and the geometry of the tooth flank of the helical teeth 50 on side gear 14 may be flexible in accordance with an embodiment of the invention. The tooth count (i.e., the number of helical teeth 50) of side gear 14 may be considered a low tooth count. For example, the tooth count may be as low as 12. Although a tooth count as low as 12 is mentioned in detail, the tooth count may be lower or higher in other embodiments of the invention. The tooth flank for the helical teeth 50 on the side gear 14 may be determined as an enveloping surface to successive positions of the pinion tooth flank when the pinion 12 is rotating about its axis 22 and moving around the axis 24 of the side gear 14. An expression for the position vector of a point $\mathbf{r}_{sg}$ of the tooth flank of the teeth 50 on side gear 14 may be derived from an equation for pinion tooth flank (Equation 5) set forth below:

$$ r_p^* = r_p^* (U_p, V_p, \varphi_p) \qquad \text{(Equation 5)} $$

Substitution of $\varphi_p$ may be required to determine $\mathbf{r}_{sg}$. This may be accomplished through use of the equation of contact (Equation 6) set forth below:
$$ n_p \cdot V_\Sigma = 0 \qquad \text{(Equation 6)} $$

In connection with Equation 6, $n_p$ denotes the unit normal vector to the pinion tooth flank, and $V_\Sigma$ denotes the vector of the resultant motion of the pinion 12 relative to the side gear 14. Both $n_p$ and $V_\Sigma$ are functions of $\varphi_p$ as set forth in the equations below (Equations 7 and 8).
$$ n_p = n_p (U_p, V_p, \varphi_p) \qquad \text{(Equation 7)} $$

$$V_{\sum} = V_{\sum}(U_p, V_p, \varphi_p) \hspace{2cm} \text{(Equation 8)}$$

By solving for $\varphi_p$ in Equations 7 and 8, the derived expression for $\varphi_p$ may be substituted into Equation 5, which then returns an expression for the tooth flank of the teeth 50 of side gear 14.

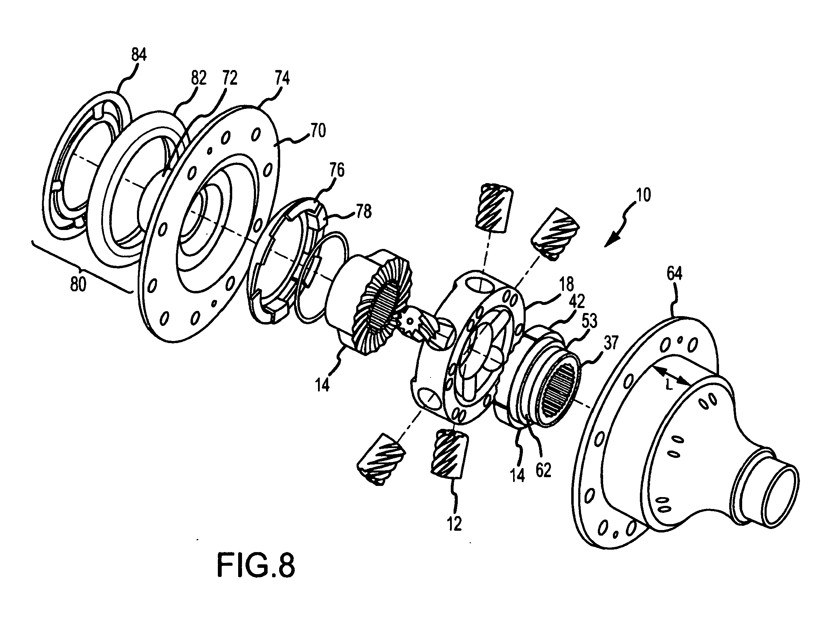

The side gear 14 may further include a supporting diameter 53. In particular, the supporting diameter 53 may comprise a second annular hub portion 53 (e.g., similar to first annular hub portion 37). However, the supporting diameter 53 may have an outer diameter that is larger than an outer diameter of the first annular hub portion 37. In addition, the supporting diameter 53 may have an outer diameter that is smaller than an outer diameter of the main portion 42 of side gear 14 that includes helical face 46. The supporting diameter 53 may be configured to further reinforce side gear 14. Referring now to FIG. 8, an exploded view of an electrically selectable locking differential incorporating a gear set 10 in accordance with an embodiment of the invention is illustrated. The differential may further include a thrust washer and/or shim 62. Shim 62 is configured to adjust proper side gear 14 orientation/placement during assembly. Shim 62 may be disposed adjacent the supporting diameter 53 and around the first annular hub 37. In conventional gear sets, the shim 62 may be located at the end of the hub 37. The location of the shim 62 in a differential that incorporates a gear set 10 including side gear 14 in accordance with an embodiment of the invention may affect axial take-up.

As set forth above, in an embodiment, the first gear 12 may comprise a helical pinion for use in a differential, and the first gear 12 may be provided to transmit torque from a torque ring 18 to a second gear (e.g., side gear 14). Although the gear set 10 is described in connection with the use of the torque ring 18 in an embodiment, the torque ring 18 may be omitted in other embodiments of the invention and the first gear 12 may be supported on axles extending through bores 36. In the embodiment utilizing torque ring 18, torque ring 18 may be generally ring-shaped. Torque ring 18 may be made from one piece of material (i.e., comprise a unitary, integral, and/or monolithic structure) in an embodiment of the invention. Torque ring 18 may be configured for locating one or more pinions 12 in a radial pattern between side gears 14. The torque ring 18 may have a plurality of radially inwardly extending holes 54 extending into the torque ring 18 from an outer radial surface 56 of the torque ring 18. The outer radial surface 56 of torque ring 18 may be cylindrical in shape, as may be best illustrated in FIG. 3B. Accordingly, the outer radial surface 56 of torque ring 18 may not be spherical. While a spherical outer radial surface 56 may make the assembly of the gear set 10 with torque ring 18 more difficult, the cylindrical shape of the outer radial surface 56 in accordance with an embodiment eases assembly.

The holes 54 of torque ring 18 may each have an axis. The axis of holes 54 may extend substantially radially outwardly. For example only, and without limitation, there may be approximately six holes 54 extending through the torque ring 18. Although six holes are mentioned in detail, there may be fewer or more holes 54 in other embodiments of the invention. The holes 54 may be equi-angularly spaced around the circumference of the torque ring 18. Although the holes 54 are described as being equi-angularly spaced around the circumference of the torque ring 18, the holes 54 may be spaced in any alternate arrangements and/or configurations in other embodiments of the invention. The pinions 12 may be disposed within the holes 54 in the torque ring 18. In this way, the pinions 12 may be circumferentially spaced around the torque ring 18. The number of pinions 12 may generally correspond to the number of holes 54 in the torque ring 18, although fewer pinions 12 in relation to the number of holes 54 may be used in embodiments of the invention. In these embodiments of the invention, at least one or more of the holes 54 may remain open. In the embodiments where at least one or more of the holes 54 remain open, the open holes 54 do not necessarily have to be regularly (e.g., equi-angularly) spaced around the torque ring. Instead, the open holes 54 may be adjacent to each other, spaced from each other, and/or arranged in any arrangement and/or combination.

The pinions 12 may be free to rotate within holes 54. The pinions 12 may be axially trapped between an inner surface of a housing for the torque ring 18 (e.g., a differential case) and a radially inward portion 58 of the torque ring 18. The housing for the torque ring 18 and the radially inward portion 58 of the torque ring thus restrain the pinions 12 from axial movement. Radially inward portion 58 extends circumferentially around the torque ring 18, thereby causing each of holes 54 to comprise a blind hole. A first end of hole 54 at the outer radial surface be open, while a second end of hole 54 at the radially inward portion 58 may be closed. The second end of the hole 54 may oppose the first end of the hole 54. Because holes 54 comprise blind holes, the amount of friction in connection with the gear set 10 may be reduced since there is no additional friction from other moving parts (e.g., other moving parts of a differential) acting on the pinions 12. In addition, the radially inward portion 58 allows the size of the center axle shaft (not shown) to be modified without requiring modification to the torque ring 18. In some embodiments of the invention, the torque ring 18 may include an opening extending through the radially inward portion 58 to the center axle shaft. The opening may be configured to allow tools and/or other instruments to access the center axle shaft without having to require partial and/or complete disassembly of the gear set 10.

The torque ring 18 may further include channels 60 in the side surfaces of the torque ring 18. The torque ring 18 may be configured to support the pinions 12 on their outside surfaces and to confine the pinions 12 in meshing engagement with the side gears 14. The torque ring 18 may exert pressure on the pinions 12 (e.g., the outside diameter $d_{o.p}$ of the pinions 12) to move them radially about the axis 24 (e.g., an axial centerline) of the side gears 14. Due to the meshing engagement between the pinions 12 and the side gears 14, the side gears 14 are forced to turn about their axis 24. Because the output (e.g., axle shafts) are grounded and coupled to the side gears 14, the motor vehicle incorporating gear set 10 may move. When the side gears 14 are forced to rotate at different speeds by grounding through the output (e.g., axle shafts), the pinions 12 may rotate within the torque ring 18 and in mesh with the side gears 14 to compensate. Helical teeth 20 of pinions 12 may extend into the channels 60 (e.g., the opposed channels 60) in the side surfaces of the torque ring 18. Helical teeth 50 on helical face 46 of side gear 14 may also extend into the channels 60 in the side surfaces of the torque ring 18. In this way, the helical teeth 20 of pinions 12 may be meshed engagement with the helical teeth 50 of side gear 14.

The torque ring 18 may be configured to provide flexibility with respect to structural features to accommodate various embodiments. For example, the torque ring 18 may be modified to comprise features to access and retain axle shaft C-clips 26 as illustrated, for example, in FIGS. 6A-B in an embodiment. For another example, the torque ring 18 may be modified to include a mechanical fuse link 68 that is designed to fail at a predetermined shear value which governs the amount of allowable differential torque that the torque ring 18 may experience. For example, the mechanical fuse link 68 may comprise a shear pin which shears at a predetermined torque. The mechanical fuse link 68 may be for torque fusing and/or limiting. The mechanical fuse link 68 may retain the torque ring 18 to the differential case 64, for example, until a predetermined torque is reached.

As set forth herein, the gear set 10 may be used in a differential. Although the gear set 10 is described for use in connection with a differential, the gear set 10 may be used in other applications in other embodiments of the invention. When gear set 10 is used in a differential, the differential may be provided to allow a motor vehicle to negotiate turns while maintaining power to both the left and right wheels of a drive axle. A differential incorporating gear set 10 in accordance with the present invention may provide increased strength and robustness, and may be especially robust relative to its compact differential size. The gear set envelope for a differential incorporating gear set 10 may be relatively compact and may provide for great flexibility in packaging. Furthermore, a differential incorporating a gear set 10 in accordance with an embodiment of the invention may allow for greater commonality of parts (i.e., the components may be common to various types of differentials) and transportability (i.e., the ability to use the same gear set and internal components for various models of motor vehicles), thereby improving ease of manufacture. Finally, a differential incorporating a gear set 10 in accordance with an embodiment of the invention may reduce the need for higher cost materials and may also reduce noise, vibration, and harshness ("NVH") that may be associated with other conventional designs.

When the gear set 10 is incorporated into a differential, the differential may further include a differential case 64. Differential case 64 may be provided to house the gear set 10 and/or any number of other components of the differential. In an embodiment, differential case 64 may not require pinion cross shaft bores which may increase ease of manufacturing. Accordingly, the differential case 64 may be configured to have an opening only at each axial end of the differential case in those embodiments that do not require pinion cross shaft bores. The differential case 64 may be made from low cost materials. The differential case 64 may be subjected to minimal loading. The differential may further include a ring gear (not shown). The ring gear may be connected to an input source and/or drive source (not shown) in a conventional manner for rotating the differential case 64. In an embodiment where the gear set 10 utilizes a torque ring 18, the torque ring 18 may be mounted within the differential case 64 in any manner conventional in the art so as to be configured for common rotation with the differential case. For example, the torque ring 18 may include a plurality of axially extending apertures through which a plurality of fasteners 66 may extend through the torque ring 18 and the differential case 64. In this way, torque from the ring gear may be applied to the torque ring 18 by means of a mechanical connection and/or attachment to the ring gear (e.g., directly attached to the ring gear).

The gear set 10 may be used in an open differential, a limited slip differential, and/or a locking differential in various embodiments. An open differential may allow two axle wheels to rotate at different speeds. However, an open differential may generally be configured for torque to take the path of least resistance, which may provide the greatest risk of a motor vehicle being stuck because of the inability to have torque transfer to the wheel that has the most traction.

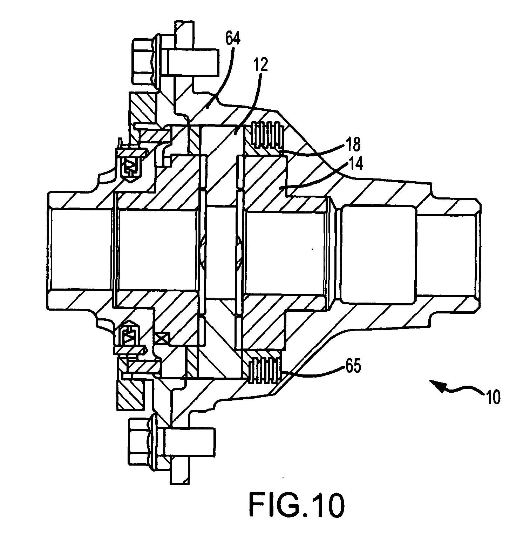

A limited slip differential may be substantially similar to an open differential, but may further include a clutch pack 65 that is configured to limit the slippage associated with an open differential by transferring a portion of the power from one wheel to another wheel (e.g., if the side gears 14 are forced to different speeds by an imbalance of traction). The clutch pack 65 may best be illustrated in FIG. 10. The clutch pack 65 may be mechanically coupled to the side gear 14, torque ring 18, and/or a differential case in order to limit slippage and restore tractive effort. In a limited slip differential, as the pinions 12 rotate within the torque ring 18 in mesh with the side gears 14, the separating forces may exert pressure forcing the side gears 14 outward. The force of the side gears 14 may be used to compress the clutch plates of the clutch pack 65. In accordance with the present invention, the torque ring 18 and side gears 14 may be configured to direct a greater proportion of the gear separating forces to thrusting the side gears 14 outward, thereby increasing the pressure available to compress the clutch plates of the clutch pack 65. Alternatively, a limited slip differential incorporating a gear set 10 in accordance with the present invention may be configured to induce drag on the pinions 12 as they rotate within the torque ring 18.

A locking differential may be substantially similar to an open differential, but may be configured to maintain free differential action during normal driving of a motor vehicle to allow two wheels to operate at different speeds (i.e., like an open differential), but to fully lock when excessive wheel slippage occurs. That is, if a wheel starts to slip, the drive axle may be fully locked side to side, providing full power to both wheels. The locking differential may comprise a selectable locking differential in accordance with an embodiment. However, the locking function may also be automatic in other embodiments.

Referring back to FIG. 8, an exploded view of a locking differential is illustrated. In an embodiment of the invention, the differential case 64 in which at least a portion of gear set 10 is housed may comprise a flanged body (e.g., as illustrated). In particular, the differential case 12 may be configured to have an axial length L for housing components of the differential that is relatively short compared to conventional designs. Accordingly, the locking differential may be of a compact size, but may still be configured to house differential components. Without the compact nature of the gear set 10 and torque ring 18, in certain embodiments, it could otherwise be difficult to find sufficient space for the differential, as well as locking, components. Still referring to FIG. 8, the locking differential may further include a cover 70. Cover 70 may be configured for connection to the differential case 64. Cover 70 may comprise a hub 72 and a flanged portion 74. The flanged portion 74 of cover 70 may be configured to correspond to the flanged portion of differential case 64 in an embodiment of the differential.

Still referring to FIG. 8, a locking differential may further include a locking ring 76. Locking ring 76 may also be referred to as a lock collar. The locking ring 76 may be configured to make the axles lock side-to-side when the locking ring 76 is engaged. The torque ring 18 may be configured to provide the torque path to the pinions 12 or the locking ring 76, depending upon the mode of operation or design. The locking ring 76 may be generally ring-shaped and may include a plurality of axially extending protrusions 78. The protrusions 78 may be circumferentially spaced around the circumference of the locking ring 76. In an embodiment, the protrusions 78 may be equi-angularly spaced around the circumference of the locking ring 76. Although the protrusions 78 have been described as being equi-angularly spaced in an embodiment of the invention, the protrusions 78 may be spaced in any alternate arrangements and/or configurations in other embodiments of the invention. The locking ring 76 may be placed at a substantially increased diameter and may be coupled directly to the torque ring 18.

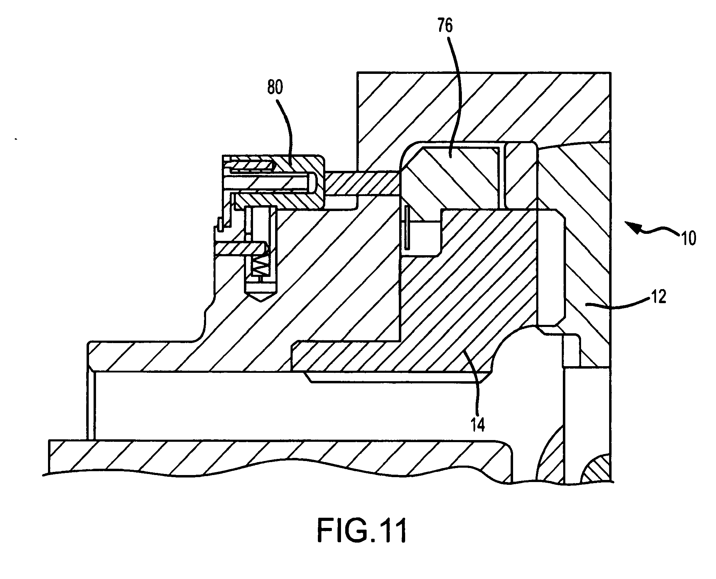

Still referring to FIG. 8, a locking differential may further include an actuator 80. The actuator 80 may be provided to engage the locking ring 76 and force the locking ring 76 into engagement with the side gear 14 in order to make the axles lock side-to-side. The actuator 80 may be powered and/or signaled by one or more of the following methods: electricity, vacuum, pneumatic, hydraulic, or mechanical means. Referring now to FIG. 11, an air or hydraulic mechanical means for actuator 80 is illustrated. Referring back to FIG. 8, an electric means may also be used for actuator 80 in an embodiment. The actuator 80 may include a stator housing 82 and an armature plate 84. The stator housing 82 may house a stator that is configured to activate armature plate 84. Armature plate 84 may then, in turn, be configured to activate locking ring 76. In this way, actuator 80 is configured to relay its movement, when energized, to the locking ring 76 that may be splined to a side gear 14 and may further be connected (e.g., coupled) with the torque ring 18 through complementary face tooth profiles. The face tooth profiles may be arranged with angled contact surfaces so as to exploit the torque applied and pull the locking ring 76 into full engagement.

A locking differential, for example, as illustrated in FIG. 8, may function as an open differential until the actuator 80 is energized. When torque from the ring gear (not shown) is applied to the torque ring 18, the locking ring 76 (e.g., connected to the torque ring 18) may transfer torque to the side gear 14, and no relative motion can take place between the side gear 14 and the torque ring 18. With one of the side gears 14 coupled directly to the to torque ring 18, the other side gear 14 cannot move relative to the torque ring 18 via the gear mesh with the pinions 12. The locked condition will continue during the driving, coasting, forward movement, reverse movement, stopping, and starting, so long as the power of the actuator 80 is maintained. When actuator power and torque pressure are removed, a return spring (not shown) acting between the side gear 14 and the locking component 76 may return the locking component 76 to the default unlocked position. When the actuator 80 comprises an electric actuator, upon deactivation of the stator in the stator housing 82, the armature plate 84 may retract and the selectable locking differential may then return to an open differential state.

A locking differential, for example, as illustrated in FIG. 8, may require no external equipment for actuation, other than a 12 V DC power supply (i.e., be self-containing). A locking differential may have an improved actuation method with low backlash and may have a positive lock indication using a common wiring harness, in some embodiments. A locking differential may also be configured for installation in different and/or various differential cases with the only necessary modification to the system being the actuator pins and/or length of the axle shaft splined hub of the side gears 14 in order to achieve such transportability.

The foregoing descriptions of specific embodiments of the present invention have been presented for purposes of illustration and description. They are not intended to be exhaustive or to limit the invention to the precise forms disclosed, and various modifications and variations are possible in light of the above teaching. The embodiments were chosen and described in order to explain the principles of the invention and its practical application, to thereby enable others skilled in the art to utilize the invention and various embodiments with various modifications as are suited to the particular use contemplated. The invention has been described in great detail in the foregoing specification, and it is believed that various alterations and modifications of the invention will become apparent to those skilled in the art from a reading and understanding of the specification. It is intended that all such alterations and modifications are included in the invention, insofar as they come within the scope of the appended claims. It is intended that the scope of the invention be defined by the claims appended hereto and their equivalents.

**Claims**

1.  A gear set (10), comprising:

    a side gear (14) comprising a helical face gear with at least one helical tooth (50); and
    a helical pinion (12) configured for meshing engagement with the side gear (14), wherein the helical pinion (12) has at least one helical tooth (20) and an apex angle that is less than about 20°.

2.  The gear set (10) of claim 1, wherein the helical tooth (50) of the side gear (14) and the helical tooth (20) of the helical pinion (12) are forged.

3.  The gear set (10) of claim 1, further comprising a plurality of helical pinions (12) configured for meshing engagement with the side gear (14).

4.  The gear set (10) of claim 1, wherein the apex angle is governed by the following equation:

$$\theta_p \leq \sin^{-1}\left(\frac{d_{o.p} - d_{l.p}}{d_{o.sg} - d_{in.sg}}\right),$$ where $d_{o.p}$ is the outer diameter of the helical pinion (12), $d_{l.p}$ is the limit diameter of the helical pinion (12), $d_{o.sg}$ is the outer diameter of the side gear (14), and $d_{in.sg}$ is the inner diameter of the side gear (14).

5.  The gear set (10) of claim 1, wherein the helical pinion (12) comprises a boss (28) at a first end (30) of the helical pinion (12).

6.  The gear set (10) of claim 1, wherein the helical pinion (12) is substantially flat at a first end (30) of the helical pinion (12) and is substantially hemispherical at a second end (34) of the helical pinion (12).

7.  The gear set (10) of claim 1, wherein the side gear (14) comprises a first annular hub portion (37) configured to receive an axle shaft

8.  The gear set (10) of claim 7, wherein the side gear (14) comprises a main portion (42) with a circumferentially extending outer surface (43) with at least one projection (44) extending radially outwardly from the outer surface (43).

9.  The gear set (10) of claim 1, wherein the side gear (14) further comprises a hub (52) on the helical face (46), the hub (52) extending circumferentially around an inner diameter of the side gear (14) with the helical tooth (50) of the side gear (14) extending radially inwardly toward the hub (52).

10. The gear set (10) of claim 9, wherein the hub (52) is integral with the helical tooth (50) on the side gear (14).

11. The gear set (10) of claim 10, wherein a top surface of the helical tooth (50) on the side gear (14) is substantially flush with a top surface of the hub (52).

12. The gear set (10) of claim 8, wherein the side gear (14) comprises a second annular hub portion (53), wherein an outer diameter of the second annular hub portion (53) is greater than an outer diameter of the first annular hub portion (37) and an outer diameter of the second annular hub portion (53) is less than an outer diameter of the main portion (42).

13. A differential, comprising:

a differential case (64);
a side gear (14) comprising a helical face gear; and
a helical pinion (12) configured for meshing engagement with the side gear (14), wherein the helical pinion (12) has an apex angle that is less than about 20°.

14. The differential of claim 13, further comprising a torque ring (18) configured to support the helical pinion (12).

15. The differential of claim 14, wherein the torque ring (18) comprises at least one hole (54) extending radially inwardly from an outer radial surface (56) of the torque ring (18), and wherein the helical pinion (12) is disposed in the hole (54), wherein the at least one hole (54) comprises a blind hole, such that the hole (54) is open at a first end at the outer radial surface (56) of the torque ring (18) and the hole (54) is closed at a second end opposing the first end.

**Patentansprüche**

1. Radsatz (10), versehen mit:

einem Seitenrad (14), welches ein schräg verzahntes Kronenrad mit mindestens einem Schrägzahn (50) aufweist; und
einem schräg verzahnten Zahnrad (12), welches für einen kämmenden Eingriff mit dem Seitenrad (14) ausgelegt ist, wobei das schräg verzahnte Zahnrad (12) mindestens einen Schrägzahn (20) und einen Öffnungswinkel von weniger als etwa 20° aufweist.

2. Radsatz (10) gemäß Anspruch 1, bei welcher der Schrägzahn (50) des Seitenrads (14) und der Schrägzahn (20) des schräg verzahnten Zahnrads (12) geschmiedet sind.

3. Radsatz (10) gemäß Anspruch 1, ferner versehen mit einer Mehrzahl von schräg verzahnten Zahnrädern (12), die für einen kämmenden Eingriff mit dem Seitenrad (14) ausgelegt sind.

4. Radsatz (10) gemäß Anspruch 1, bei welchem der Öffnungswinkel durch die nachstehende Gleichung bestimmt ist:

$$\theta_p \leq \sin^{-1}\left(\frac{d_{o.p} - d_{l.p}}{d_{o.sg} - d_{in.sg}}\right)$$

wobei $d_{o.p}$ der Außendurchmesser des schräg verzahnten Zahnrads (12) ist, $d_{l.p}$ der Grenzdurchmesser des schräg verzahnten Zahnrads (12) ist, $d_{o.sg}$ der Außendurchmesser des Seitenrads (14) ist, und $d_{in.sg}$ der Innendurchmesser des Seitenrads (14) ist.

5. Radsatz (10) gemäß Anspruch 1, bei welchem das schräg verzahnte Zahnrad (12) einen Ansatz (28) an einem ersten Ende (30) des schräg verzahnten Zahnrads (12) aufweist.

6. Radsatz (10) gemäß Anspruch 1, bei welchem das schräg verzahnte Zahnrad (12) an einem ersten Ende (30) des schräg verzahnten Zahnrads (12) im Wesentlichen flach ist und an einem zweiten Ende (34) des schräg verzahnten Zahnrads (12) im Wesentlichen halbkugelförmig ist.

7. Radsatz (10) gemäß Anspruch 1, bei welchem das Seitenrad (14) einen ersten ringförmigen Nabenbereich (37) aufweist, der zur Aufnahme einer Achswelle ausgelegt ist.

8. Radsatz (10) gemäß Anspruch 7, bei welchem das Seitenrad (14) einen Hauptbereich (42) mit einer in Umfangsrichtung verlaufenden Außenfläche (43) mit mindestens einem Vorsprung (44) aufweist, der sich radial nach außen von der Außenfläche (43) weg erstreckt.

9. Radsatz (10) gemäß Anspruch 1, bei welchem das Seitenrad (14) ferner eine Nabe (52) an der schräg verzahnten Stirnfläche (46) aufweist, wobei die Nabe (52) in Umfangsrichtung um den Innendurchmesser des Seitenrads (14) verläuft und wobei der Schrägzahn (50) des Seitenrads (14) radial nach innen in Richtung auf die Nabe (52) verläuft.

**10.** Radsatz (10) gemäß Anspruch 9, bei welchem die Nabe (52) einstückig mit dem Schrägzahn (50) des Seitenrads (14) ausgebildet ist.

**11.** Radsatz (10) gemäß Anspruch 10, bei welchem eine obere Fläche des wendelförmigen Zahns (50) an dem Seitenrad (14) im Wesentlichen bündig mit einer oberen Fläche der Nabe (52) ist.

**12.** Radsatz (10) gemäß Anspruch 8, bei welchem das Seitenrad (14) einen zweiten ringförmigen Nabenbereich (53) aufweist, wobei ein Außendurchmesser des zweiten ringförmigen Nabenbereichs (53) größer als ein Außendurchmesser des ersten ringförmigen Nabenbereichs (37) ist und ein Außendurchmesser des zweiten ringförmigen Nabenbereichs (53) kleiner als ein Außendurchmesser des Hauptbereichs (42) ist.

**13.** Differential versehen mit:

einem Differentialgehäuse (64);
einem Seitenrad (14), welches ein schräg verzahntes Kronenrad aufweist; und
einem schräg verzahnten Zahnrad (12), welches für einen kämmenden Eingriff mit dem Seitenrad (14) ausgelegt ist, wobei das schräg verzahnte Zahnrad (12) einen Öffnungswinkel von weniger als etwa 20° aufweist.

**14.** Differential gemäß Anspruch 13, ferner versehen mit einem Drehmomentring (18), der ausgelegt ist, das schräg verzahnte Zahnrad (12) abzustützen.

**15.** Differential gemäß Anspruch 14, bei welchem der Drehmomentring (18) mindestens ein Loch (54) aufweist, welches sich radial nach innen von einer äußeren radialen Oberfläche (56) des Drehmomentrings (18) erstreckt, und wobei das schräg verzahnte Zahnrad (12) in dem Loch (54) angeordnet ist, wobei das mindestens eine Loch (54) ein Blindloch ist, so dass das Loch (54) an einem ersten Ende an der äußeren radialen Oberfläche (56) des Drehmomentrings (18) offen ist und das Loch (54) an einem zweiten Ende gegenüberliegend dem ersten Ende verschlossen ist.

**Revendications**

**1.** Train d'engrenages (10), comprenant :

un planétaire de différentiel (14) comprenant une roue de champ hélicoïdale avec au moins une dent en hélice (50) ; et
un pignon hélicoïdal (12) configuré pour venir en engagement d'engrènement avec le planétaire de différentiel (14), où le pignon hélicoïdal (12) a au moins une dent en hélice (20) et un angle de sommet qui est inférieur à environ 20°.

**2.** Train d'engrenages (10) de la revendication 1, dans lequel la dent en hélice (50) du planétaire de différentiel (14) et la dent en hélice (20) du pignon hélicoïdal (12) sont forgées.

**3.** Train d'engrenages (10) de la revendication 1, comprenant en outre une pluralité de pignons hélicoïdaux (12) configurés pour venir en engagement d'engrènement avec le planétaire de différentiel (14).

**4.** Train d'engrenages (10) de la revendication 1, dans lequel l'angle de sommet est régi par l'équation suivante :

$$\theta_p \le \sin^{-1}\left(\frac{d_{o.p} - d_{L.p}}{d_{o.sg} - d_{in.sg}}\right),$$

où $d_{o.p}$ est le diamètre extérieur du pignon hélicoïdal (12), $d_{L}$p est le diamètre limite du pignon hélicoïdal (12), $d_{o.sg}$ est le diamètre extérieur du planétaire de différentiel (14), et $d_{in.sg}$ est le diamètre intérieur du planétaire de différentiel (14).

**5.** Train d'engrenages (10) de la revendication 1, dans lequel le pignon hélicoïdal (12) comprend un bossage (28) au niveau d'une première extrémité (30) du pignon hélicoïdal (12).

6. Train d'engrenages (10) de la revendication 1, dans lequel le pignon hélicoïdal (12) est sensiblement plat au niveau d'une première extrémité (30) du pignon hélicoïdal (12) et est sensiblement hémisphérique au niveau d'une deuxième extrémité (34) du pignon hélicoïdal (12).

7. Train d'engrenages (10) de la revendication 1, dans lequel le planétaire de différentiel (14) comprend une première partie de moyeu annulaire (37) configurée pour recevoir un arbre de roue.

8. Train d'engrenages (10) de la revendication 7, dans lequel le planétaire de différentiel (14) comprend une partie principale (42) avec une surface extérieure s'étendant de manière circonférentielle (43) avec au moins une saillie (44) s'étendant radialement vers l'extérieur à partir de la surface extérieure (43).

9. Train d'engrenages (10) de la revendication 1, dans lequel le planétaire de différentiel (14) comprend en outre un moyeu (52) sur la face hélicoïdale (46), le moyeu (52) s'étendant de manière circonférentielle autour d'un diamètre intérieur du planétaire de différentiel (14) avec la dent en hélice (50) du planétaire de différentiel (14) s'étendant radialement vers l'intérieur en direction du moyeu (52).

10. Train d'engrenages (10) de la revendication 9, dans lequel le moyeu (52) est solidaire de la dent en hélice (50) sur le planétaire de différentiel (14).

11. Train d'engrenages (10) de la revendication 10, dans lequel une surface supérieure de la dent en hélice (50) sur le planétaire de différentiel (14) est sensiblement alignée avec une surface supérieure du moyeu (52).

12. Train d'engrenages (10) de la revendication 8, dans lequel le planétaire de différentiel (14) comprend une deuxième partie de moyeu annulaire (53), où un diamètre extérieur de la deuxième partie de moyeu annulaire (53) est supérieur à un diamètre extérieur de la première partie de moyeu annulaire (37) et un diamètre extérieur de la deuxième partie de moyeu annulaire (53) est inférieur à un diamètre extérieur de la partie principale (42).

13. Différentiel, comprenant :

   un carter de différentiel (64) ;
   un planétaire de différentiel (14) comprenant une roue de champ hélicoïdale ; et
   un pignon hélicoïdal (12) configuré pour venir en engagement d'engrènement avec le planétaire de différentiel (14), où le pignon hélicoïdal (12) a un angle de sommet qui est inférieur à environ 20°.

14. Différentiel de la revendication 13, comprenant en outre une couronne de couple (18) configurée pour supporter le pignon hélicoïdal (12).

15. Différentiel de la revendication 14, dans lequel la couronne de couple (18) comprend au moins un trou (54) s'étendant radialement vers l'intérieur à partir d'une surface extérieure radiale (56) de la couronne de couple (18), et où le pignon hélicoïdal (12) est disposé dans le trou (54), où l'au moins un trou (54) comprend un trou borgne, de sorte que le trou (54) soit ouvert à une première extrémité au niveau de la surface extérieure radiale (56) de la couronne de couple (18) et que le trou (54) soit fermé à une deuxième extrémité opposée à la première extrémité.

FIG.1

FIG.2B

FIG.2A

FIG.3A

FIG.3B

EP 2 440 812 B1

FIG.4

FIG.5

FIG.6B

FIG.6A

FIG.7

FIG.8

FIG.9

FIG.10

FIG.11

EP 2 440 812 B1

FIG.12

EP 2 440 812 B1

**REFERENCES CITED IN THE DESCRIPTION**

**Patent documents cited in the description**

- US 3253483 A
- US 4791832 A